# EUROPEAN PATENT SPECIFICATION

(11) **EP 4 427 448 B1**
(45) Date of publication and mention of the grant of the patent: **03.09.2025**
(21) Application number: 22821306.2
(22) Date of filing: 17.10.2022
(51) Int. Cl.: H04L 67/63

(54) **METHOD OF OPERATING A TELECOMMUNICATIONS NETWORK**
VERFAHREN ZUM BETRIEB EINES TELEKOMMUNIKATIONSNETZES
PROCÉDÉ D'EXPLOITATION D'UN RÉSEAU DE TÉLÉCOMMUNICATIONS

(30) Priority: 05.11.2021 GB 202115948
(43) Date of publication of application: 11.09.2024
(73) Proprietor: British Telecommunications public limited company, London, Greater London E1 8EE (GB)
(72) Inventor: BEDDUS, Simon, London E1 8EE (GB); EL-MOUSSA, Fadi, London E1 8EE (GB); CRISTINA, Claudia, London E1 8EE (GB)
(74) Representative: British Telecommunications public limited company Intellectual Property Department
(86) International application number: PCT/EP2022/078837
(87) International publication number: WO 2023/078662

(56) References cited:
- US-A1- 2015 188 949

## Description

### Background

The "Internet of Things" (IoT) grants connectivity to traditionally non-networked devices, such as sensors (*e.g*. temperature or optical). Some applications of loT devices include people counting (*i.e.* footfall measurement), monitoring of vehicular traffic, air quality analysis, temperature and other environmental measurement, and control systems for streetlights or vehicular traffic signals.

The number of loT devices that are being connected to each other and to the "Cloud" over the Internet is estimated to be in the tens of billions. Furthermore, the use of loT devices, particularly for sensing the environment, is growing. Many of these loT devices have low processing power (and are, for example, based around a Raspberry Pi^{RTM} a small factor PC or an Application-Specific Integrated Circuit). Accordingly, loT devices typically transmit their data to a nearby gateway that has more compute, battery and/or network resources, and which is then responsible for communicating the data on to a remote server for providing a service for that data (*e.g.* storing, processing and/or responding) by means an application operating on the remote server.

As a result of the relatively rudimentary nature of loT devices, loT devices (especially those that operate in public areas) are prone to compromise by means of a malicious attack. Known malicious attacks include: denial of service; man-in-the-middle; malware; and botnets. For example, malware may be introduced as part of a malicious attack on a network or even by way of physical tampering. A single compromised device can then spread malware to other devices and networks resulting in attacks being replicated very quickly. Beyond malicious attacks, poor design and/or malfunction of an loT device can also cause an loT device, and in turn a network, to be compromised with detrimental consequences.

At the same time, in order to ensure efficient utilisation of computational resources, it may be desirable to configure a network such that an loT device and its network connection have a sufficient, but also appropriate, level of security.

It is an aim of the present invention to at least alleviate some of the aforementioned problems.

US20150188949A1 discloses a method for managing the use of gateways on a network includes authenticating a user, determining and managing a path between a user computing device and a destination computing device, the path including at least one of the gateways, and managing user traffic on the path according to a policy associated with the user.

### Statements of Invention

According to a first aspect of the present invention, there is provided a method of operating a telecommunications network, the telecommunications network comprising a client device, a server configured to provide a service for the client device, and a plurality of network nodes communicatively connecting the client device and the server, in which said method comprises the steps of: identifying: characteristic information associated with the client device, wherein said characteristic information is retrieved from a network location provided by the client device, and in which said characteristic information is pre-defined and is comprised within a Manufacturer Usage Description, MUD, file; the service for the client device; in dependence upon the identified service and characteristic information, a service capability requirement for the provision of the identified service to the client device; and capability information for each of the plurality of network nodes; determining a given network node of the plurality of network nodes to be suitable in response to the capability information of said network node satisfying the identified service capability requirement; and subsequently routing network communications associated with the identified service between the client device and the server via at least one of the plurality of network nodes that is determined to be suitable.

Preferably, the determined suitability of a network node is subsequently stored as a part of the characteristic information associated with the client device.

Optionally, the method further comprises the step of, for each network node, comparing the service capability requirement and the capability information, thereby subsequently to perform the determining step.

Optionally, the method is performed by: an edge device for providing an access network for the client device to access the plurality of network nodes; the server; and/or by at least one of the plurality of network nodes.

Optionally, the capability information is identified in response to a request for retrieval and communication of capability information, said retrieval being performed by the network node to which the capability information pertains, from an entity from which said request originated.

Optionally, the service capability requirement is identified in response to a request for retrieval and communication of the service capability requirement, said retrieval being performed by the server, from an entity from which said request originated.

Optionally, a suitable network node sufficiently, but not excessively, satisfies the identified service capability requirement, at least in comparison to a threshold requirement and/or to another network node of the plurality of network nodes.

Optionally, the service is requested by the client device or pushed to client device by the server. Optionally, the plurality of network nodes are interconnected so as to provide a plurality of routes for network communications to be communicated between the client device and the server.

Optionally, the pre-defined information is provided directly by the client device or by a remote network resource identified by the client device.

Preferably, the characteristic information comprises observed characteristic information that is generated in dependence on monitored network communications associated with the client device within the telecommunications network.

Preferably, the network communications are monitored as to: data protocols; time and/or frequency of communication; bandwidth usage; network addresses; encryption type; and/or packet content.

Preferably, the characteristic information is indicative of a/an: type of the client device; function of the client device; type of data that is output by the client device; and/or operating status of the client device.

Preferably, the capability information is indicative of a security capability. Optionally, the security capability is a capability to provide and/or a particular type of: firewall functionality; encryption functionality; Virtualised Private Network functionality; packet processing function (for example, deep packet inspection); and/or remediation functionality (for example, microsegmentation). Optionally, the capability information is identified in dependence upon the identified service.

Preferably, the service capability requirement is a required security capability.

Preferably, the service capability requirement is a required network function. Optionally, said network function is a/an: routing function, such as for determining a routing policy; and/or network quality assurance function.

Preferably, the capability information is indicative of the client device generating Personally Identifiable Information (PII).

Preferably, the routing of network communications is only performed via the at least one network node that is determined to be suitable. Preferably, the at least one network node provides an end-to-end connection between the client device and the server.

Preferably, the service is a network function and/or a data processing function. Preferably, said service is performed by a remote distributed computing system, and for example by a cloud computing system.

According to another aspect of the invention, there is provided a computer-readable carrier medium comprising a computer program, which, when the computer program is executed by a computer, causes the computer to carry out the steps of a method as described above.

According to yet another aspect of the invention, there is provided an apparatus for a telecommunications network, said telecommunications network comprising a client device, a server configured to provide a service for the client device, a plurality of network nodes communicatively connecting the client device and the server, the apparatus comprising: a processor configured to perform the steps of: identifying: characteristic information associated with the client device, wherein said characteristic information is retrieved from a network location provided by the client device, and in which said characteristic information is pre-defined and is comprised within a Manufacturer Usage Description, MUD, file; the service for the client device; in dependence upon the identified service and characteristic information, a service capability requirement for the provision of the service by the server to the client device; and capability information for each of the plurality of network nodes; determining a given network node to be suitable in response to the capability information of said network node satisfying the identified service capability requirement; and subsequently routing network communications associated with the identified service between the client device and the server via at least one of the plurality of network nodes that is determined to be suitable. Preferably, the client device is in the form of an "Internet of Things" ("loT") device. Preferably, each network node is available to be in the form of a/an: network access point; router; gateway; switch; firewall; server; database; controller; processor; and/or virtualised network function.

Preferably, the apparatus comprises a communications interface for communicatively connecting to the telecommunications network, and at least the client device and/or server. Preferably, the apparatus is in the form of an edge device for providing an access network for the client device to access the plurality of network nodes, wherein the processor is provided, at least, as part of the edge device. Optionally, the client device is configured to access the plurality of network nodes only via the edge device, and more preferably said edge device is in the form of a gateway.

Any apparatus feature may also be provided as a corresponding step of a method, and vice versa. As used herein, means plus function features may alternatively be expressed in terms of their corresponding structure, for example as a suitably-programmed processor.

As used throughout, the word 'or' can be interpreted in the exclusive and/or inclusive sense, unless otherwise specified.

The invention is defined solely by the independent claims.

Further embodiments are defined by the dependent claims.

The present invention is now described, purely by way of example, with reference to the accompanying diagrammatic drawings, in which:
Figure 1 shows a telecommunications system; and
Figure 2 shows a process for operating the telecommunications system.

### Specific Description

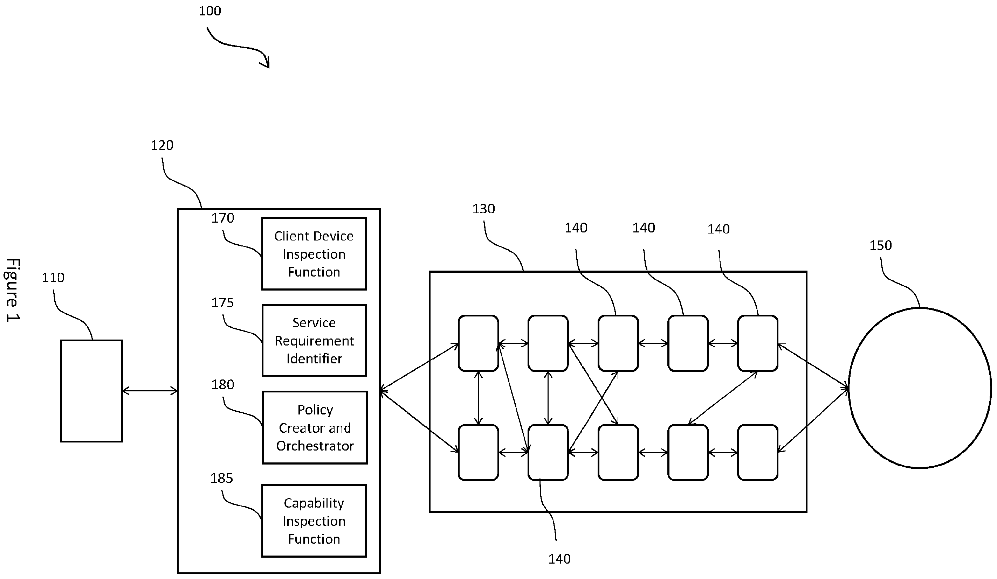

Figure 1 shows an exemplary telecommunications system 100, which comprises a/an: client device 110; Edge Device (ED) 120; a wide area telecommunications network 130, comprising a plurality of nodes 140; and a sever 150.

The client device 110 is available communicatively to connect to the ED 120, which in turn is configured to provide the client device with access to the wide area network 130. The client device 110 is in the form of: a personal computer (laptop or desktop); mobile telecommunications device; and/or Internet of Things (IoT) device.

The ED 120 is available to be a wireless or wired access point for the wide area network 130, and is configured to provide a local area network (e.g. by means of Wi-Fi^{RTM}, Bluetooth^{RTM}, ZigBee^{RTM}, *etc*.) and/or cellular connectivity. The ED is therefore available to comprise a router, modem and/or network gateway. The ED is arranged in-line with user traffic that flows between the client device 110 and the wide area network 130, and is configured to process such traffic.

The wide area network 130 comprises a broadband and/or cellular telecommunications network that allows access to, at least, the server 150. The wide area network comprises a plurality of network nodes 140, which are functional components that help facilitate operation of the network 130, including routing of traffic within the network, and therefore between the ED 120 and the server 150. The nodes 140 are connected via a plurality of interconnections (shown in Figure 1 as double-headed arrows), which provide different pathways for routing traffic within the network 130. A network node is available to be in the form of a: router (including a Multiprotocol Label Switching router); switch; firewall; gateway; access point; database; controller or processor; or virtualised network function.

The server 150 is configured to provide a service to the client device 110, for example in response to a service request from the client device. Services that are available to be provided by the server include data processing (*e.g*. storage, retrieval, transfer, analysis, manipulation, transformation and inspection) and a network service (*e.g*. routing, network configuration and security functions). Services are available to be provided by applications running on the server 150. The server 150 is available to form part of a plurality of interconnected servers, and in particular a Cloud system. The server 150 is accessible to the client device via the wide area network 130.

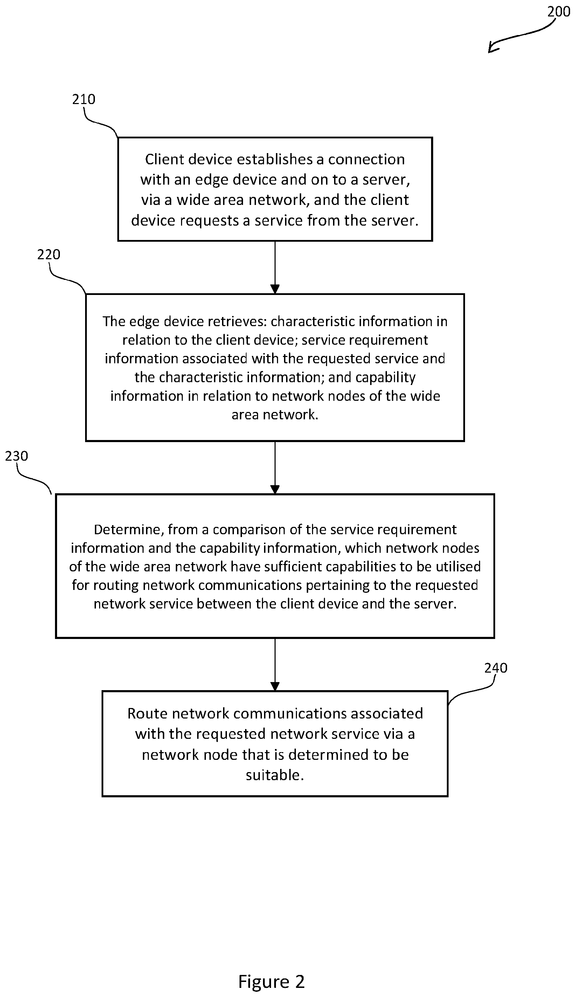

By means of the aforementioned components, and according to the method shown in, and described with reference to, Figure 2, the ED is configured to route traffic between the client device and the server via network nodes 140 that are selected so as to meet requirements demanded by a service that is requested by the client device from the server; this is performed with the aim of improving network resource utilisation, secure data transport and processing.

In more detail, the ED 120 comprises a: Client Device Inspection Function (CDIF) 170; Service Requirement Identifier (SRI) 175; Policy Creator and Orchestrator (PCO) 180; and Capability Inspection Function (CIF) 185.

The CDIF 170 is provided so as to compile characteristic information associated with the client device 110. The CDIF is a device discovery and a traffic monitoring function that is configured to identify each client device connected to the ED, retrieve pre-defined characteristic information, and to monitor traffic to and from each client device so as to generate observed characteristic information for those client devices.

The pre-defined characteristic information for the client device is defined by an operator, manufacturer and/or vendor of the client device. In particular, the pre-defined characteristic information is static and is provided by the client device itself. For example, the pre-defined characteristic information is in the form of a Manufacturer Usage Description (MUD) file, as typically retrieved from a network resource accessible to the ED via the wide area network 130, for example, on the Internet via a URL provided by, or associated with the client device 110, or by inspecting DHCP traffic associated with the client device.

The CDIF is configured to inspect traffic to and/or from the client device 110, and based on said traffic, the CDIF is also configured to generate observed characteristic information for the client device 110. The observed characteristic information represents a dynamic behaviour profile for the client device based on analysis of network communications between the client device and the ED 120, wide area network 130 and/or the server 150. For example, the observed client device information is available to include:
- temporal information, such as frequency, timings and/or duration of network communications;
- geographic information based on network address geolocation;
- network usage information, such as volume of network traffic (uplink and/or downlink) and bandwidth usage;
- network communication information, including usage of types network communication protocols (*e.g.* TCP, UDP) and security protocols (*e.g.* TLS), as well as network communication content, such as data type and/or packet content;
- network service requests, including identities of historically-requested network services and DNS requests; and/or
- network connection information, including type of access connection used (e.g. wireless local area network, cellular network, hybrid access, *etc*.)*.*

The Service Requirement Identifier (SRI) 175 function is configured to retrieve service requirement information (also herein referred to as *"service capability requirement*") regarding a computational service that the server 150 is configured to perform.

Service requirement information are requirements, and particularly computational requirements, of the wide area network 130 (and specifically, the plurality of network nodes 140) for the server to provide a given service over the wide area network 130. In one example, the service requirement information is provided to, and stored at, the SRI by the server 150.

The service requirement information for a given service is available to depend upon the characteristic information associated with the client device 110, such that different service requirement information is output for different types of client devices seeking the same service.

In a specific example, the service requirement information requires that: only certain types of client devices and network nodes may be used to communicate network communications associated with a given service and/or such network communications are configured according to a particular protocol, format and/or level of encryption.

The Capability Inspection Function (CIF) 185 is configured to retrieve computational capability information associated with a network node 140. The capability information is received at the CIF 185 from each of the network nodes in the wide area network 130; this may be performed by the network nodes "pushing" such information to the CIF 185 or by the CIF requesting, and then receiving, the information from each network node.

A computational capability pertains to computational characteristics and functionalities, and in particular in relation to security, such as: firewall, encryption, remediation, and VPN functionality, and/or to hardware and/or software version characteristics.

The PCO 180 is configured to identify a suitable route through the wide area network 130 for communications between the client device 150 and the server 150, based on reconciliation of the service requirement information and the capability information, and then to enforce such routing. For example, the PCO is available to configure: network routing policies; firewall parameters; a VPN; proxies; and DHCPs.

In this way, by using service requirement information, the ED 120 is capable of dynamically creating bespoke secure network communication paths to help securely route communications between the client device 110 and server 150 in a resource-efficient manner.

Figure 2 shows an exemplary process 200 for operating the telecommunications network 100.

At a first step 210, the client device 110 establishes a connection with the wide area network 130, via the ED 120. In this way, the client device may communicate with the server 150. The client device subsequently communicates a service request so as to request a service from the server.

At a next step 220, prior to the server 150 executing the requested service, the ED identifies, by means of the CDIF 170, the client device 110 and subsequently determines characteristic information associated with the client device (*i.e.* by retrieving pre-defined characteristic information and/or by retrieving and/or generating observed characteristic information).

Furthermore, by means of the SRI 175, the ED identifies the requested service, for example, based on a destination network address of the service request (e.g. IP address, port number, URL, *etc*.)*.* In dependence upon the identity of the requested service and the identified characteristic information for the client device 110, the SRI retrieves the service requirement information for the requested service.

The ED also retrieves, by means of the CIF 185, capability information in relation to the plurality of network nodes 140.

At a subsequent step 230, the PCO 180 compares the capability information of each network node 140 and the service requirement information so as to identify whether a given network node has capabilities that meets the requirements as provided in the retrieved service requirement information. The PCO subsequently selects a set of network nodes that are determined to be suitable (*i.e.* have the computational capabilities required by the requested service) and then routes network communications between the client device and the server using the suitable network nodes 240.

In a specific example, the client device 110 is a network-enabled personal medical mentoring device (e.g. a wearable heart monitor), that requests a data storage and processing service from the server 150. The client device therefore generates personally-sensitive medical data (or *"Personally Identifiable Information"*); this is determined from the pre-defined characteristic information, which is in the form of a Manufacturer Usage Description (MUD) file. The ED retrieves from the server service requirement information for the requested service, and in turn identifies that, for such devices, the requested service requires that data is only communicated using sufficient encryption and only using sufficient firewall capability.

In another example, the client device is a network-enabled CCTV security camera that requests a facial recognition service from the server 150. Again, in this example, the characteristic information for the client device provides that the data from the client device comprises sensitive personal data. As such, for such devices, then service requirement information requires that the data is only communicated using a TCP protocol, to a pre-defined endpoint, using a secure connection having Transport Layer Security, and with a bandwidth of at least 2Mbits/s.

In both specific examples, according to the processing described with reference to steps 230 and 240, the PCO 180 therefore identifies, using the retrieved capability information, network nodes that are determined to be suitable for the requested service, and the PCO accordingly only routes data from the client device for the requested service via those suitable network nodes.

### Alternatives and Modifications

In an alternative, the SRI 175, PCO180 and the CIF 185 reside, instead of only within the ED 120, at least in part, within a or each network node 140; as a result, a/the network node/s is/are available to ascertain the service requirement information and capability information, and then to determine suitability pertaining to a given requested service.

In one example, the capability information and the service requirement information are in the forms of scores indicative of an extent to which a capability is provided. Accordingly, the network nodes for routing network communications associated with a requested service are selected so that the capability information score is at least equal to the service requirement information score. For efficiency, the difference between the capability information score and the service requirement information is minimised.

Any reference numerals appearing in the claims are for illustration only and shall not limit the scope of the claims.

## Claims

1. A method (200) of operating a telecommunications network (100), the telecommunications network comprising a client device (110), a server (150) configured to provide a service for the client device, and a plurality of network nodes (140) communicatively connecting the client device and the server, in which said method comprises the steps of:
identifying:
characteristic information associated with the client device (220), wherein said characteristic information comprises pre-defined characteristic information retrieved from a network location provided by the client device, and in which said pre-defined characteristic information is comprised within a Manufacturer Usage Description, MUD, file;
the service for the client device (220);
in dependence upon the identified service and characteristic information, a service capability requirement for the provision of the identified service to the client device (220); and
capability information for each of the plurality of network nodes (220);
determining a given network node of the plurality of network nodes to be suitable in response to the capability information of said network node satisfying the identified service capability requirement (230); and
subsequently routing network communications associated with the identified service between the client device and the server via at least one of the plurality of network nodes that is determined to be suitable (240).

2. A method according to any preceding claim, wherein the characteristic information further comprises observed characteristic information that is generated in dependence on monitored network communications associated with the client device (110) within the telecommunications network (100).

3. A method according to Claim 2, wherein the network communications are monitored as to: data protocols; time and/or frequency of communication; bandwidth usage; network addresses; encryption type; and/or packet content.

4. A method according to any preceding claim, wherein the characteristic information is indicative of a/an: type of the client device; function of the client device; type of data that is output by the client device; and/or operating status of the client device.

5. A method according to any preceding claim, wherein the capability information is indicative of a security capability.

6. A method according to Claim 5, wherein the service capability requirement is a required security capability.

7. A method according to any preceding claim, wherein the service capability requirement is a required network function.

8. A method according to any preceding claim, wherein the capability information is indicative of the client device (110) generating Personally Identifiable Information, PII.

9. A method according to any preceding claim, wherein the routing of network communications is only performed via the at least one network node (140) that is determined to be suitable.

10. A method according to any preceding claim, wherein the service is a network function and/or a data processing function.

11. A computer-readable carrier medium comprising a computer program, which, when the computer program is executed by a computer, causes the computer to carry out the steps of any one of the preceding claims.

12. An apparatus (120) for a telecommunications network (100), said telecommunications network comprising a client device (110), a server (150) configured to provide a service for the client device, a plurality of network nodes (140) communicatively connecting the client device and the server, the apparatus comprising:
a processor configured to perform the steps of:
identifying:
characteristic information associated with the client device, wherein said characteristic information is retrieved from a network location provided by the client device, and in which said characteristic information is pre-defined and is comprised within a Manufacturer Usage Description, MUD, file (220);
the service for the client device (220);
in dependence upon the identified service and characteristic information, a service capability requirement for the provision of the service by the server to the client device (220); and
capability information for each of the plurality of network nodes (220);
determining a given network node to be suitable in response to the capability information of said network node satisfying the identified service capability requirement (230); and
subsequently routing network communications associated with the identified service between the client device and the server via at least one of the plurality of network nodes that is determined to be suitable (240).

13. An apparatus according to Claim 12, wherein the apparatus (120) is in the form of an edge device for providing an access network for the client device (110) to access the plurality of network nodes (140), wherein the processor is provided, at least, as part of the edge device.

## Patentansprüche

1. Verfahren (200) zum Betreiben eines Telekommunikationsnetzes (100), wobei das Telekommunikationsnetz eine Client-Vorrichtung (110), einen Server (150), der dazu ausgelegt ist, einen Dienst für die Client-Vorrichtung bereitzustellen, und eine Mehrzahl von Netzwerkknoten (140) umfasst, die die Client-Vorrichtung und den Server kommunikativ verbindet, wobei das Verfahren die folgenden Schritte umfasst:
Identifizieren:
charakteristischer Informationen, die mit der Client-Vorrichtung assoziiert sind (220), wobei die charakteristischen Informationen vordefinierte charakteristische Informationen umfassen, die von einem Netzwerkort abgerufen werden, der durch die Client-Vorrichtung bereitgestellt wird, und wobei die vordefinierten charakteristischen Informationen innerhalb einer Herstellernutzungsbeschreibungsdatei, MUD-Datei, umfasst sind;
des Diensts für die Client-Vorrichtung (220);
einer Dienstfähigkeitsanforderung für die Bereitstellung des identifizierten Dienstes an die Client-Vorrichtung (220) in Abhängigkeit von dem identifizierten Dienst und den identifizierten charakteristischen Informationen; und
von Fähigkeitsinformationen für jeden der Mehrzahl von Netzwerkknoten (220);
Bestimmen eines gegebenen Netzwerkknotens der Mehrzahl von Netzwerkknoten als geeignet in Reaktion darauf, dass die Fähigkeitsinformationen des Netzwerkknotens die identifizierte Dienstfähigkeitsanforderung erfüllen (230); und
anschließendes Routen von Netzwerkkommunikationen, die mit dem identifizierten Dienst assoziiert sind, zwischen der Client-Vorrichtung und dem Server über mindestens einen der Mehrzahl von Netzwerkknoten, der als geeignet bestimmt wird (240).

2. Verfahren nach einem der vorhergehenden Ansprüche, wobei die charakteristischen Informationen ferner beobachtete charakteristische Informationen umfassen, die in Abhängigkeit von überwachten Netzwerkkommunikationen erzeugt werden, die mit der Client-Vorrichtung (110) innerhalb des Telekommunikationsnetzes (100) assoziiert sind.

3. Verfahren nach Anspruch 2, wobei die Netzwerkkommunikationen im Hinblick auf Folgendes überwacht werden: Datenprotokolle; Zeit und/oder Frequenz der Kommunikation; Bandbreitennutzung; Netzwerkadressen; Verschlüsselungstyp; und/oder Paketinhalt.

4. Verfahren nach einem der vorhergehenden Ansprüche, wobei die charakteristischen Informationen Folgendes angeben: einen Typ der Client-Vorrichtung; eine Funktion der Client-Vorrichtung; einen Typ von Daten, der von der Client-Vorrichtung ausgegeben wird; und/oder einen Betriebsstatus der Client-Vorrichtung.

5. Verfahren nach einem der vorhergehenden Ansprüche, wobei die Fähigkeitsinformationen eine Sicherheitsfähigkeit angeben.

6. Verfahren nach Anspruch 5, wobei die Dienstfähigkeitsanforderung eine erforderliche Sicherheitsfähigkeit ist.

7. Verfahren nach einem der vorhergehenden Ansprüche, wobei die Dienstfähigkeitsanforderung eine erforderliche Netzwerkfunktion ist.

8. Verfahren nach einem der vorhergehenden Ansprüche, wobei die Fähigkeitsinformationen angeben, dass die Client-Vorrichtung (110) personenbezogene identifizierbare Informationen, PII, erzeugt.

9. Verfahren nach einem der vorhergehenden Ansprüche, wobei das Routen von Netzwerkkommunikationen nur über den mindestens einen Netzwerkknoten (140) durchgeführt wird, der als geeignet bestimmt wird.

10. Verfahren nach einem der vorhergehenden Ansprüche, wobei der Dienst eine Netzwerkfunktion und/oder eine Datenverarbeitungsfunktion ist.

11. Computerlesbares Trägermedium, das ein Computerprogramm umfasst, das, wenn das Computerprogramm von einem Computer ausgeführt wird, den Computer veranlasst, die Schritte nach einem der vorhergehenden Ansprüche auszuführen.

12. Einrichtung (120) für ein Telekommunikationsnetzwerk (100), wobei das Telekommunikationsnetzwerk eine Client-Vorrichtung (110), einen Server (150), der dazu ausgelegt ist, einen Dienst für die Client-Vorrichtung bereitzustellen, und eine Mehrzahl von Netzwerkknoten (140) umfasst, die die Client-Vorrichtung und den Server kommunikativ verbindet, wobei die Einrichtung Folgendes umfasst:
einen Prozessor, der dazu ausgelegt ist, die folgenden Schritte auszuführen:
Identifizieren:
charakteristischer Informationen, die mit der Client-Vorrichtung assoziiert sind, wobei die charakteristischen Informationen von einem Netzwerkort abgerufen werden, der durch die Client-Vorrichtung bereitgestellt wird, und wobei die charakteristischen Informationen vordefiniert sind und innerhalb einer Herstellernutzungsbeschreibungsdatei, MUD-Datei, umfasst sind (220);
des Diensts für die Client-Vorrichtung (220);
einer Dienstfähigkeitsanforderung für die Bereitstellung des Dienstes durch den Server an die Client-Vorrichtung (220) in Abhängigkeit von dem identifizierten Dienst und den identifizierten charakteristischen Informationen; und
von Fähigkeitsinformationen für jeden der Mehrzahl von Netzwerkknoten (220);
Bestimmen eines gegebenen Netzwerkknotens als geeignet in Reaktion darauf, dass die Fähigkeitsinformationen des Netzwerkknotens die identifizierte Dienstfähigkeitsanforderung erfüllen (230); und
anschließendes Routen von Netzwerkkommunikationen, die mit dem identifizierten Dienst assoziiert sind, zwischen der Client-Vorrichtung und dem Server über mindestens einen der Mehrzahl von Netzwerkknoten, der als geeignet bestimmt wird (240).

13. Einrichtung nach Anspruch 12, wobei die Einrichtung (120) in Form einer Edge-Vorrichtung zum Bereitstellen eines Zugangsnetzwerks für die Client-Vorrichtung (110) für den Zugriff auf die Mehrzahl von Netzwerkknoten (140) ist, wobei der Prozessor zumindest als Teil der Edge-Vorrichtung vorgesehen ist.

## Revendications

1. Procédé (200) d'exploitation d'un réseau de télécommunications (100), le réseau de télécommunications comprenant un dispositif client (110), un serveur (150) configuré pour fournir un service au dispositif client, et une pluralité de nœuds de réseau (140) reliant de manière communicative le dispositif client et le serveur, ledit procédé comprenant les étapes suivantes :
identifier :
des informations relatives aux caractéristiques associées au dispositif client (220), où lesdites informations relatives aux caractéristiques comprennent des informations relatives aux caractéristiques prédéfinies récupérées à partir d'un emplacement de réseau fourni par le dispositif client, et où lesdites informations relatives aux caractéristiques prédéfinies sont comprises dans un fichier MUD, Manufacturer Usage Description ;
le service pour le dispositif client (220) ;
en fonction du service identifié et des informations relatives aux caractéristiques, des exigences de capacité de service pour la fourniture du service identifié au dispositif client (220) ; et
des informations de capacité pour chacun de la pluralité de nœuds de réseau (220) ;
déterminer un nœud de réseau donné parmi la pluralité de nœuds de réseau comme étant approprié en réponse aux informations de capacité dudit nœud de réseau satisfaisant aux exigences de capacité du service identifié (230) ; et
acheminer ensuite les communications de réseau associées au service identifié entre le dispositif client et le serveur par l'intermédiaire d'au moins un nœud parmi la pluralité de nœuds de réseau qui est déterminé comme étant approprié (240).

2. Procédé selon l'une quelconque des revendications précédentes, dans lequel les informations relatives aux caractéristiques comprennent en outre des informations relatives aux caractéristiques observées qui sont générées en fonction des communications réseau surveillées associées au dispositif client (110) au sein du réseau de télécommunications (100).

3. Procédé selon la revendication 2, dans lequel les communications réseau sont surveillées en ce qui concerne : les protocoles de données ; le temps et/ou la fréquence de communication ; l'utilisation de la bande passante ; les adresses réseau ; le type de cryptage ; et/ou le contenu des paquets.

4. Procédé selon l'une quelconque des revendications précédentes, dans lequel les informations relatives aux caractéristiques sont indicatives : du type du dispositif client ; de la fonction du dispositif client ; du type de données qui sont émises par le dispositif client ; et/ou de l'état de fonctionnement du dispositif client.

5. Procédé selon l'une quelconque des revendications précédentes, dans lequel les informations de capacité sont indicatives d'une capacité de sécurité.

6. Procédé selon la revendication 5, dans lequel l'exigence de capacité de service est une capacité de sécurité requise.

7. Procédé selon l'une quelconque des revendications précédentes, dans lequel l'exigence de capacité de service est une fonction réseau requise.

8. Procédé selon l'une quelconque des revendications précédentes, dans lequel les informations de capacité sont indicatives que le dispositif client (110) génère des informations d'identification personnelle, PII.

9. Procédé selon l'une quelconque des revendications précédentes, dans lequel l'acheminement des communications réseau est uniquement effectué par l'intermédiaire de l'au moins un nœud de réseau (140) qui est déterminé comme étant approprié.

10. Procédé selon l'une quelconque des revendications précédentes, dans lequel le service est une fonction réseau et/ou une fonction de traitement de données.

11. Support lisible par ordinateur comprenant un programme d'ordinateur qui, lorsque le programme d'ordinateur est exécuté par un ordinateur, il amène l'ordinateur à exécuter les étapes de l'une quelconque des revendications précédentes.

12. Appareil (120) pour un réseau de télécommunications (100), ledit réseau de télécommunications comprenant un dispositif client (110), un serveur (150) configuré pour fournir un service au dispositif client, une pluralité de nœuds de réseau (140) reliant de manière communicative le dispositif client et le serveur, l'appareil comprenant :
un processeur configuré pour exécuter les étapes suivantes :
identifier :
des informations relatives aux caractéristiques associées au dispositif client, où lesdites informations relatives aux caractéristiques sont récupérées à partir d'un emplacement réseau fourni par le dispositif client, et où lesdites informations relatives aux caractéristiques sont prédéfinies et sont comprises dans un fichier MUD, Manufacturer Usage Description (220) ;
le service pour le dispositif client (220) ;
en fonction du service identifié et des informations relatives aux caractéristiques, des exigences de capacité de service pour la fourniture du service par le serveur au dispositif client (220) ; et
des informations de capacité pour chacun de la pluralité de nœuds de réseau (220) ;
déterminer un nœud de réseau donné comme étant approprié en réponse aux informations de capacité dudit nœud de réseau satisfaisant aux exigences de capacité du service identifié (230) ; et
acheminer ensuite les communications de réseau associées au service identifié entre le dispositif client et le serveur par l'intermédiaire d'au moins un nœud parmi la pluralité de nœuds de réseau qui est déterminé comme étant approprié (240).

13. Appareil selon la revendication 12, dans lequel l'appareil (120) se présente sous la forme d'un dispositif périphérique destiné à fournir un réseau d'accès au dispositif client (110) pour accéder à la pluralité de nœuds de réseau (140), où le processeur est fourni, au moins, en tant que partie du dispositif périphérique.
